(19) Europäisches Patentamt
European Patent Office
Office européen des brevets

(11) **EP 1 487 906 B1**

(12) **EUROPÄISCHE PATENTSCHRIFT**

(45) Veröffentlichungstag und Bekanntmachung des Hinweises auf die Patenterteilung:
**31.10.2007 Patentblatt 2007/44**

(51) Int Cl.:
*C08J 5/00* (2006.01)          *C08F 265/06* (2006.01)
*C08F 230/08* (2006.01)      *B29C 39/00* (2006.01)

(21) Anmeldenummer: 03704498.9

(22) Anmeldetag: **30.01.2003**

(86) Internationale Anmeldenummer:
**PCT/EP2003/000912**

(87) Internationale Veröffentlichungsnummer:
**WO 2003/080716 (02.10.2003 Gazette 2003/40)**

(54) **GIESSMASSE UND DARAUS HERGESTELLTE KUNSTSTOFFFORMKÖRPER**

CASTING COMPOUND AND PLASTIC SHAPED BODIES PRODUCED THEREFROM

MATIERE DE COULAGE ET CORPS MOULES PLASTIQUES PRODUITS A PARTIR DE CETTE MATIERE DE COULAGE

(84) Benannte Vertragsstaaten:
**AT BE BG CH CY CZ DE DK EE ES FI FR GB GR HU IE IT LI LU MC NL PT SE SI SK TR**

(30) Priorität: **27.03.2002 DE 10214436**

(43) Veröffentlichungstag der Anmeldung:
**22.12.2004 Patentblatt 2004/52**

(73) Patentinhaber: **BLANCO GmbH + Co KG**
**75038 Oberderdingen (DE)**

(72) Erfinder:
• **HAJEK, Andreas**
  **74336 Brackenheim (DE)**

• **HECK, Thomas**
  **74858 Aglasterhausen (DE)**

(74) Vertreter: **Wössner, Gottfried**
**HOEGER, STELLRECHT & PARTNER**
**Patentanwälte**
**Uhlandstrasse 14c**
**70182 Stuttgart (DE)**

(56) Entgegenhaltungen:
**DE-A- 4 304 494          DE-A- 19 949 461**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine aushärtbare Gießmasse zur Herstellung von Kunststoffformkörpern mit einer flüssigen monomeren Acrylatkomponente und einem Anteil eines partikelförmigen anorganischen Materials im Bereich von 45 bis 85 Gew.%, bezogen auf die Gießmasse. Ferner betrifft die Erfindung Kunststoffformkörper, die unter Verwendung der vorstehend genannten Gießmassen hergestellt sind. Darüber hinaus betrifft die Erfindung die Verwendung von mit ungesättigten Gruppen funktionalisierten Organosiloxanen als Monomerkomponente in aushärtbaren Gießmassen, die zur Herstellung von Formkörpern des Sanitärbereichs, insbesondere von Küchenspülen und Küchenarbeitsplatten, dienen.

Gießmassen der eingangs beschriebenen Art sind vielfältig aus der Literatur bekannt, beispielsweise aus dem deutschen Patent DE 24 49 656 sowie dem europäischen Patent EP 0 361 101 oder der WO 95/23825. Sie werden in großem Umfang zur Herstellung von Kunststoffformkörpern, insbesondere in Form von Küchenspülen, Arbeitsplatten, Waschbecken, Badewannen, Duschtassen etc. verwendet und zeichnen sich durch eine Reihe vorzüglicher Gebrauchseigenschaften aus.

Bei Kunststoffformkörpern, die insbesondere im Küchenbereich ihren Einsatz finden, ist die Reinigungsfreundlichkeit von großer Bedeutung.

Die bisher bekannten Kunststoffformkörper, die aus herkömmlichen aushärtbaren Gießmassen hergestellt werden, weisen eine zufrieden stellende Reinigungsfreundlichkeit auf.

Insbesondere im Küchenbereich jedoch bilden sich auf den Kunststoffformkörpern, beispielsweise Küchenspülen, immer wieder hartnäckige Verschmutzungen von Eiweißen, Stärke und Fetten, die mit aggressiven Reinigern, wie beispielsweise Scheuermitteln, entfernt werden müssen. Neben ihrer Unverträglichkeit für die Umwelt bewirken aggressive Reinigungsmittel Veränderungen der Oberflächeneigenschaften der Kunststoffformkörper und führen zu Alterungserscheinungen, die sich beispielsweise in einer verminderten Reinigungsfreundlichkeit des Formkörpers bemerkbar machen. Auch thermische und mechanische Belastungen, die beispielsweise beim Aufsetzen heisser Kochtöpfe und Küchenspülen einwirken, bewirken einen die Reinigungsfreundlichkeit vermindernden Alterungseffekt.

Davon ausgehend besteht ein Bedürfnis dahin gehend, aushärtbare Gießmassen sowie daraus hergestellte Kunststoffformkörper zu schaffen, die eine verbesserte Reinigungsfreundlichkeit aufweisen.

Diese Aufgabe wird erfindungsgemäß dadurch gelöst, dass die eingangs beschriebene Gießmasse ferner eine hydrophobe Monomerkomponente enthält, die mindestens ein mit einer ungesättigten Gruppe funktionalisiertes Organosiloxan umfasst.

In der Druckschrift DE 35 35 283 A1 werden Lacke beschrieben, die auf ungesättigten Polyester- und Vinylharzen basieren und die, um ihnen eine Antigraffiti-Wirkung zu verleihen, mit einer -Z-R-Q-Gruppierung funktionalisierte Polysiloxane umfassen, wobei Z eine Alkylgruppe, R eine Polyestergruppe und Q unter anderem eine ungesättigte Gruppe ist. Aus Giessmassen hergestellte Kunststoffformkörper, die unter ständiger abrasiver, thermischer sowie mechanischer Belastung ihre Reinigungsfreundlichkeit beibehalten, werden in dieser Druckschrift nicht beschrieben.

Es hat sich gezeigt, dass durch den Zusatz von mit ungesättigten Gruppen funktionalisierten Organosiloxanen zur erfindungsgemäßen Gießmasse Kunststoffformkörper mit einer deutlich verbesserten Reinigungsfreundlichkeit erhalten werden. Ursache hierfür ist, dass die mit ungesättigten Gruppen funktionalisierten Organosiloxane die Oberflächenenergie der vorgenannten, auf einer flüssigen monomeren Acrylatkomponente basierenden Kunststoffformkörper verringern.

Je geringer die Oberflächenenergie einer Oberfläche ist, desto schwieriger gestaltet sich ihre Benetzbarkeit. Hierbei spielen die Wechselwirkungen der beteiligten Phasen an der Phasengrenze eine wichtige Rolle. Die Oberflächenenergie (Oberflächenspannung) lässt sich in einen polaren und einen dispersiven Anteil aufspalten. Eine polare Flüssigkeit beispielsweise steht im Wesentlichen mit dem polaren Anteil der Oberflächenenergie einer Festkörperoberfläche in Wechselwirkung, d.h. mit den gerichteten Kräften, eine unpolare Flüssigkeit beispielsweise im Wesentlichen mit dem dispersiven Anteil, d.h. mit den ungerichteten Kräften. Für den Zusammenhang zwischen Oberflächenenergie und Anschmutzungsverhalten ergibt sich, dass durch gleichzeitiges Herabsetzen des dispersiven und polaren Anteils der Oberflächenenergie eine generell schlechte Benetzbarkeit der Kunststoffformkörper erreicht wird, da Wechselwirkungen von unpolaren und polaren Schmutzträgern mit dem Kunststoffformkörper vermindert werden (hydrophobe und oleophobe Einstellung der Spülenoberfläche).

Überraschenderweise konnte festgestellt werden, dass das verbesserte Reinigungsverhalten auch nach intensiver abrasiver Behandlung des Formkörpers bestehen bleibt. Vermutlich wird ein mit einer ungesättigten Gruppe funktionalisiertes Organosiloxan über die Ausdehnung des Formkörpers im Wesentlichen homogen in die Polymerketten der Polymermatrix eingebaut.

Ein weiterer vorteilhafter Effekt der erfindungsgemäßen Gießmassen liegt darin, dass unter Verwendung von acrylat- oder methacrylatfunktionalisierten Organosiloxanen auf der Basis von Organosiloxanyl-Derivaten von Alkandiolmonovinylethern hergestellte Kunststoffformkörper eine verbesserte UV-Beständigkeit, d.h. einen verringerten Alterungseffekt, aufweisen. Im Gegensatz zu aus herkömmlichen Gießmassen hergestellten Kunststoffformkörpern, deren Oberflächenenergie, und damit deren Benetzbarkeit, unter Einwirkung von UV-Strahlung zunimmt, bleibt die Oberflächenenergie eines aus einer erfindungsgemäßen Gießmasse hergestellten Kunststoffformkörpers unter Verwendung von acrylat- und/oder methacrylatfunktionalisierten Organosiloxanen auf der Basis von Organosiloxanyl-Derivaten von Alkandiolmonovinylethern auch unter UV-Lichteinwirkung nahezu konstant oder verringert sich sogar.

Mit einer ungesättigten Gruppe funktionalisierte Organosiloxane umfassen bevorzugt eine oder mehrere Ethenyl-, 1,1-Ethendiyl- oder 1,2-Ethendiyl-Gruppierungen.

Vorteilhafterweise kommen als mit einer Ethenyl- oder 1,1-Ethendiyl-Gruppierung funktionalisierte Organosiloxane acrylat- bzw. methacrylatfunktionalisierte Organosiloxane zum Einsatz, da sie mit der flüssigen monomeren Acrylatkomponente der aushärtbaren Gießmasse gut verträglich sind und während des Aushärtungsvorgangs des Kunststoffformkörpers weitgehend problemlos in die Polymerketten eingebaut werden. Dabei werden unter dem Begriff Acrylatkomponente alle Propensäureester, wie beispielsweise Methyl- oder Ethylpropensäureester, und deren Abkömmlinge, wie beispielsweise Methyl- oder Ethylmethacrylsäureester, verstanden. Unter acrylatfunktionalisierten Organosiloxanen werden solche Organosiloxane verstanden, die eine Acrylatgruppierung umfassen.

Günstigerweise basieren die mit einer ungesättigten Gruppe funktionalisierten Organosiloxane auf Organosiloxanyl-Derivaten von Alkandiolmonovinylethern, insbesondere von 1,4-Butandiolmonovinylether, die besonders leicht und kostengünstig durch übergangsmetallkatalysierte Hydrosilylierung von Organosiloxanyl-Derivaten an Alkandiolmonovinylethern, wie es in dem europäischen Patent EP 0 819 719 beschrieben ist, zugänglich sind. Die dabei entstehenden hydroxyalkylfunktionalisierten Organosiloxan-Derivate können beispielsweise mit ungesättigten Carbonsäuren zu doppelbindungsfunktionalisierten Organosiloxanen verestert werden.

Der Anteil an hydrophober Monomerkomponente liegt üblicherweise in einem Bereich von ca. 0,1 bis ca. 15 Gew.%, wobei unterhalb dieses Minimalwertes die vorstehend genannten Vorteile nur schwach ausgeprägt sind und oberhalb dieses Maximalwertes keine wesentliche Verbesserung der vorher angesprochenen vorteilhaften Effekte erzielbar ist.

Der bevorzugte Anteil an hydrophober Monomerkomponente liegt in einem Bereich von 1 bis 12 Gew.%. Die besten Ergebnisse wurden im Bereich von 2 bis 10 Gew.% erhalten, wobei, insbesondere auch unter Kostengesichtspunkten, der Anteil an hydrophober Monomerkomponente in einem Bereich von 3 bis 8 Gew.% am meisten bevorzugt ist.

Vorteilhafterweise umfasst die erfindungsgemäße Gießmasse ferner mindestens ein partikelförmiges hydrophobes und/oder oleophobes Material, beispielsweise Polytetrafluorethylen, Fluorelastomer auf der Basis von Vinylidenfluorid-Hexafluorpropylen-Copolymerisaten, Polypropylen oder Polypropylen-Comonomer, die beispielsweise die Heißtopfbeständigkeit, die Kratzfestigkeit, die Reinigungsfreundlichkeit sowie den Glanz des Kunststoffformkörpers verbessern, oder Silikonelastomer oder hydrophobisierte Kieselsäure, die die Kratzfestigkeit, die Schlagzähigkeit bzw. die Abriebsbeständigkeit des Kunststoffformkörpers verbessern.

Der Anteil an partikelförmigem hydrophobem und/oder oleophobem Material liegt in einem Bereich von ca. 0,5 bis ca. 15 Gew.%, vorzugsweise von 1 bis 10 Gew.% und besonders bevorzugt von 2 bis 7 Gew.%.

Die Partikelgröße des partikelförmigen hydrophoben und/oder oleophoben Materials ist an sich nicht kritisch, jedoch wird ein oberes Limit der Partikel- bzw. Partikelagglomeratgröße von 500 $\mu$m empfohlen, damit der Zusatz dieses Materials auf der Sichtseite des herzustellenden Kunststoffformkörpers die Optik nicht stört. Bei mittleren Partikelgrößen $\leq 50$ $\mu$m findet man auch bei optisch sehr anspruchsvollen Materialien keinerlei Beeinträchtigung.

Wie schon eingangs ausgeführt wurde, betrifft die Erfindung Kunststoffformkörper, die unter Verwendung der zuvor diskutierten aushärtbaren Gießmasse hergestellt worden sind, wobei bevorzugt mindestens eine Sichtseitenoberflächenschicht des Formkörpers von der erfindungsgemäßen Gießmasse gebildet ist.

Wird nur die Sichtseitenoberflächenschicht von der erfindungsgemäßen aushärtbaren Gießmasse gebildet und der Rest des Formkörpers von einer weiteren Gießmasse, empfiehlt es sich, dass die Oberflächenschicht eine Dicke von 1 mm oder mehr aufweist. Diese Schichtdicke von 1 mm ist bereits ausreichend, um dem Kunststoffformkörper alle vorbeschriebenen vorteilhaften Effekte zu verschaffen.

Bevorzugt wird das hydrophobe und/oder oleophobe Material in den aus der Gießmasse gebildeten Bereichen im Wesentlichen homogen verteilt sein.

Wie bereits angesprochen wurde, eignet sich die erfindungsgemäße aushärtbare Gießmasse insbesondere zur Herstellung von Küchenspülen und Küchenarbeitsplatten, da gerade hier hartnäckige Verunreinigung durch Fette, Eiweiße oder Stärke auftreten.

Schließlich betrifft die Erfindung auch die Verwendung von mit ungesättigten Gruppen funktionalisierten Organosiloxanen als Komponente in aushärtbaren Gießmassen, die zur Herstellung von Formkörpern des Sanitärbereichs, insbesondere Küchenspülen und Küchenarbeitsplatten, dienen, wobei die Verwendung dieser funktionalisierten Organosiloxane in Gießmassen der vorstehend diskutierten Art bevorzugt ist.

Diese und weitere Vorteile der vorliegenden Erfindung werden im Folgenden anhand der Beispiele noch näher erläutert.

Zunächst sei auf die verschiedenen Testmethoden für die Beurteilung der Oberflächenqualität der erfindungsgemäß erzielten Kunststoffformkörper eingegangen:

### 1. Oberflächenenergie

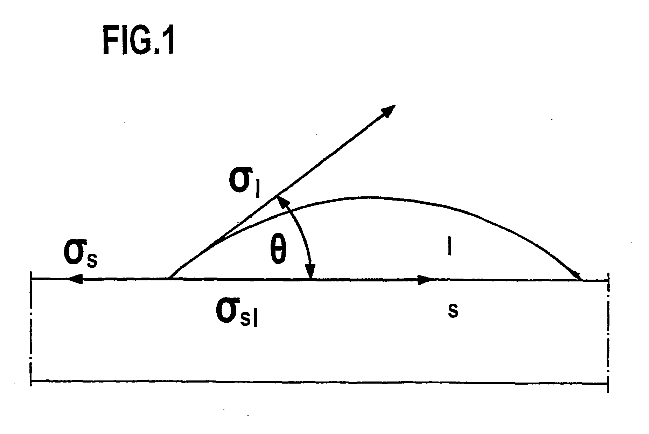

Die Oberflächenenergie (Oberflächenspannung) von Festkörpern wird mittels Tropfenkonturanalyse auf einem Kontaktwinkelmessgerät G10/DAS10 der Firma Krüss bestimmt. Dazu wird auf die saubere Oberfläche eines Probenstücks eine polare Lösung (Wasser) und eine unpolare Lösung (Dijodmethan), deren Oberflächenspannungen bekannt sind, in Form eines Tropfens aufgebracht. Von den jeweiligen Tropfen wird der Kontaktwinkel $\theta$ (Figur 1) bestimmt, wobei der Kontaktwinkel dem Winkel entspricht, unter dem die Tropfenkonturlinie auf die Unterlage auftrifft. Aus den Kontaktwinkelbestimmungen von mindestens zwei Testflüssigkeiten lässt sich die Oberflächenenergie von Festkörpern berechnen.

Der Zusammenhang zwischen den zu betrachtenden Phasen (fest (s), flüssig (l)), ihren jeweiligen Oberflächenspannungen $\sigma_f$ und $\sigma_l$, der Oberflächenspannung an der Grenzfläche fest/flüssig ($\sigma_{sl}$) sowie dem beobachtbaren Kontaktwinkel $\theta$ des Tropfens, wird durch die Gleichung nach Young zum Ausdruck gebracht:

$$\sigma_s = \sigma_{sl} + \sigma_l \cdot \cos \theta . \qquad (1)$$

Die Grenzflächenspannung jeder Phase lässt sich in einen polaren (p) und einen dispersiven (d) Anteil aufspalten. Der polare Anteil ist gekennzeichnet durch Dipol-Dipol-Wechselwirkungen, Wasserstoffbrückenbindungen oder Lewis-Säure/Lewis-Base-Wechselwirkungen. Unter dem dispersiven Anteil werden Van-der-Waals-Wechselwirkungen verstanden. Man bestimmt den Kontaktwinkel als Fortschreitewinkel, den eine Testflüssigkeit (l) mit bekanntem polarem und dispersivem Anteil $\sigma_l^p$ und $\sigma_l^d$ mit der Festkörperoberfläche (s) einnimmt. Hierzu wird ein Tropfen auf die Festkörperoberfläche aufgebracht und durch Zufuhr von Messflüssigkeit stetig vergrößert, wobei die flüssigkeitsführende Kanüle im Tropfen verbleibt. Dabei steigt zunächst der Kontaktwinkel mit der Tropfengröße an und die Ausdehnung der benetzten Fläche bleibt unverändert. Ab einer bestimmten Größe breitet sich dann der Tropfen auf der Festkörperoberfläche mit konstantem Kontaktwinkel aus. Der Kontaktwinkel eines Tropfen, der bei Flüssigkeitszufuhr zum Tropfen konstant bleibt, ist der Fortschreitewinkel. Vor der Messung wird die Flüssigkeitszufuhr gestoppt, um den Flüssigkeitsdruck aus der Kanüle zu eleminieren. Anschließend wird der Kontaktwinkel mit der vorstehend genannten Messoptik bestimmt.

Nach Owens, Wendt, Rabel und Kaeble erhält man mit $\sigma_1 = \sigma_1^d + \sigma_1^p$ und $\sigma_s = \sigma_s^d + \sigma_s^P$ die folgende Beziehung:

$$\sigma_{sl} = \sigma_s + \sigma_l - 2\left(\sqrt{\sigma_s^d \cdot \sigma_l^d} + \sqrt{\sigma_s^p \cdot \sigma_l^p}\right). \qquad (2)$$

Mit der Beziehung (2) und der Gleichung (1) lässt sich $\cos \theta$ als grenzflächenenergetische Zustandsgleichung beschreiben:

$$\cos \theta = f\left(\sigma_s, \sigma_s^d, \sigma_l, \sigma_l^d\right). \qquad (3)$$

Durch Einsetzen der Beziehung (2) in die Gleichung (1) und anschließendes Umformen erhält man eine Geradengleichung, aus deren Steigung und Achsenabschnitt sich der polare und dispersive Anteil der Oberflächenenergie einer Festkörperoberfläche durch Messung des Fortschreitewinkels von beispielsweise Wasser und Dijodmethan, deren $\sigma_l$-, $\sigma_l^d$- und $\sigma_l^p$-Werte in der Literatur erfasst sind, bestimmt wird.

### 2. UV-Bestrahlungstest

Der UV-Bestrahlungstest wird gemäß DIN ISO 4892-2A an dem Prüfgerät XT 1200 LM der Firma Atlas durchgeführt. Die Prüfbedingungen waren im Einzelnen wie folgt:

| | |
|---|---|
| Lichtquelle: | Xenonlichtbogen |
| Filtersystem: | 3 Suprax |
| Bestrahlungsstärke: | 60 W/m$^2$ bei 300 bis 400 nm |
| Prüfzyklus: | 102 min Licht und 18 min Licht mit Wasserbesprühung |

| Gesamtprüfzeit: | 777 h |
|---|---|
| Schwarzstandardtemperatur: | 65 ± 3 °C |
| Probenraumtemperatur: | 38 ± 3 °C |
| relative Luftfeuchtigkeit: | 65 ± 5 % |

Die hierbei auf die Probe einwirkende UV-Strahlung entspricht einer Jahresdosis in Mitteleuropa von 1.538 MJ/m$^2$ (hinter Fensterglas, bei Dauerbenetzung der Oberfläche mit Wasser).

3. <u>Reinigungstest</u>

Im Zusammenhang mit der Bewertung der Reinigungsfreundlichkeit, oder aber auch, anders ausgedrückt, der Verschmutzungsneigung der gebildeten Kunststoffformkörper, wird ein synthetischer Modellschmutz verwendet und das Abreinigen dieses Schmutzes unter definierten Bedingungen durchgeführt.
Als Modellschmutz wird folgende Zusammensetzung verwendet:

| 7 Gew. % | Spezialschwarz 4, Ruß (Degussa AG) |
|---|---|
| 40 Gew. % | Prozessöl 310 (ESSO AG) |
| 17 Gew. % | Arlypon DV, $C_8$-Fettsäureglycerinester (Firma Grünau Illertissen GmbH) |
| 36 Gew. % | Benzin, Kp. 65/100 °C (Fluka: 12270) |

4. <u>Abrasive Vorbelastung</u>

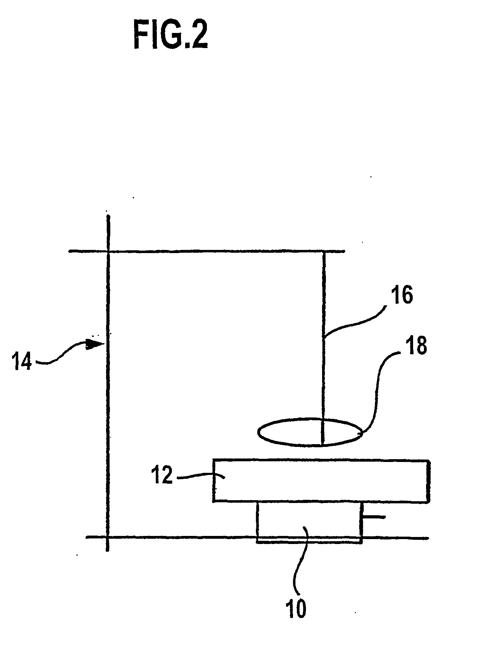

6 g Aluminiumoxid in einem Korngrößenbereich von 63 μm bis 200 μm (Aluminiumoxid 90 aktiv, neutral, Firma Merck, Deutschland) werden auf der Probe verteilt. Mit einem angefeuchteten, runden Schwamm wird diese Menge in Form einer gleichförmigen Rotationsbewegung bei 60 U/min und einem Auflagegewicht von 4 kg auf die Probenoberfläche appliziert. Nach dem Erreichen von 100 bzw. 250 Umdrehungen wird abgebrochen. Für das Abreinigen des Modellschmutzes von der zu prüfenden Oberfläche wird eine Reinigungsapparatur verwendet, wie sie schematisch in der Figur 2 dargestellt ist. Der Versuchsaufbau wird im Folgenden kurz beschrieben:
Auf einer Hebebühne 10 wird eine Waage 12 platziert, auf der der Probenkörper (nicht gezeigt) fixiert werden, kann.
Neben der Anordnung von Hebebühne 10 und Waage 12 wird ein Rührer 14 mit einstellbarer Umdrehungszahl angeordnet, so dass dessen Motorwelle 16 senkrecht über der Mitte der Waage 12 platziert ist. Im Versuch wird an der Motorwelle 16 an ihrem unteren, freien Ende ein runder Schwammkörper 18 befestigt, der drehfest mit der Welle 16 verbunden ist.
Bei der Durchführung des Abreinigungstests wird mit der Hebebühne die Waage solange angehoben, bis diese ein Auflagegewicht des Schwammkörpers von 4 kg zeigt.

Die <u>Versuchsdurchführung</u> im Einzelnen:

Es werden 0,3 g des aus den oben beschriebenen Bestandteilen bestehenden Modellschmutzes auf ein Uhrglas gegeben und mit Hilfe eines schmutzgesättigten Flachpinsels gleichmäßig, d. h. waagerecht und senkrecht überlappend, auf der Testfläche (ca. 10 cm$^2$) verteilt. Man lässt ihn 60 min lang einwirken. Anschließend wird mit Warmwasser solange abgespült, bis sich kein Ruß mehr ablöst. Danach wird mit entmineralisiertem Wasser nachgespült und luftgetrocknet. Die verbleibende Verschmutzung wird als Farbdifferenz gemessen. Als Bezug dient immer die unbehandelte Probe. Es ist zu beachten, dass der Bezugswert bei jeder einzelnen Probe zu messen ist, da geringfügige Farbunterschiede bei den Proben untereinander möglich sind.

<u>Abreinigung</u>

Die angeschmutzten Proben werden mit 10 Umdrehungen, bei einer Umlaufgeschwindigkeit von 60 U/min und einem Auflagegewicht von 4 kg gereinigt. Hierzu werden 6 g des Reinigers BLANCOCLEAN (mineralischer Putzkörpergehalt:
21,5 %, Firma BLANCO, Deutschland) eingesetzt. Für die Reinigungsdurchführung wird ein unbenutzter, feinporiger und angefeuchteter Schwamm mit einem Durchmesser von ca. 8 cm verwendet. Nach erfolgter Reinigung wird die Testfläche gut abgespült, mit entmineralisiertem Wasser nachgespült und luftgetrocknet. Die Restverschmutzung wird als Farbdifferenz zur unbehandelten Probe gemessen und als ΔE-Wert angegeben:

$$\Delta E = \sqrt{(L_{Bezug} - L_{Probe})^2 + (a_{Bezug} - a_{Probe})^2 + (b_{Bezug} - b_{Probe})^2}$$

(4)

Die Restverschmutzung [% RV] berechnet sich aus den $\Delta E$-Werten vor und nach der Abreinigung der betrachteten Oberflächen wie folgt:

$$RV = \frac{\Delta E\ gereinigt}{\Delta E\ verschmutzt} \cdot 100$$

(5)

Die Erfindung wird nun anhand von Beispielen und Vergleichsbeispielen näher erläutert:

Vergleichsbeispiel 1

2,0 kg Polymethylmethacrylat (PMMA) einer normalen Type im Molekulargewichtsbereich MW von 50.000 bis 250.000 wird in 8,0 kg Methylmethacrylat (MMA) gelöst und mit einem Entformungsmittel (35 g Stearinsäure der Firma Merck, Deutschland) und Vernetzer (200 g Trimethylolpropantrimethacrylat der Firma Agomer, Deutschland) versetzt. Man erhält einen verhältnismäßig dickflüssigen Sirup.
Zu diesem Sirup werden dann 28 kg eines Quarzsandes (silanisiert) gegeben, dessen einzelnes Korn im Kern im Wesentlichen aus Quarz und an der Oberfläche im Wesentlichen aus $\alpha$-Cristobalit besteht (EP 0 716 097 B1, ACQ der Firma Quarzwerke, Deutschland) und in einem Korngrößenbereich von 100 $\mu$m bis 500 $\mu$m vorliegt. Des Weiteren wird eine Weißpigment-Dispersion, bestehend aus 1,4 kg des oben beschriebenen Sirups, 1,3 kg eines weiteren Vernetzers (Bisphenol-A-ethoxylatdimethacrylat, Firma Akzo Nobel Chemicals, Deutschland) und 2,3 kg eines Weißpigmentes (Titandioxid, Firma Kemira, Finnland), hinzugegeben.
Zu dem vorstehend genannten Gemisch erfolgt dann die Zugabe von Peroxiden (60 g Peroxan BCC, 120 g Peroxan LB und 10 g Peroxan TB, jeweils von der Firma Pergan, Deutschland) und das thermische Aushärten der Gießmasse in geeigneten Formen (Küchenspülen).
Von einem Probenstück der Spüle wird vor und nach erfolgter UV-Bestrahlung die gesamte Oberflächenenergie sowie ihr polarer und dispersiver Anteil bestimmt. Ferner werden Probenstücke vor und nach erfolgter UV-Bestrahlung und ohne und nach erfolgter abrasiver Vorbelastung (siehe oben) mit einem synthetischen Modellschmutz verunreinigt und unter definierten Bedingungen gereinigt (siehe oben) und die an der Oberfläche verbleibende Restverschmutzung über eine photoelektrische Helligkeitsmessung bestimmt.

a) Probenstück vor der UV-Bestrahlung

- Oberflächenenergie:        43,28 mN/m
- dispersiver Anteil:        40,44 mN/m
- polarer Anteil:        2,84 mN/m
- Restverschmutzung ohne abrasive Vorbelastung:        12 %
- Restverschmutzung mit einer abrasiven Vorbelastung von 100 Belastungszyklen:        11 %
- Restverschmutzung mit einer abrasiven Vorbelastung von 250 Belastungszyklen :        11 %

b) Probenstück nach der UV-Bestrahlung

- Oberflächenenergie:        45,99 mN/m
- dispersiver Anteil:        25,33 mN/m
- polarer Anteil:        20,66 mN/m
- Restverschmutzung ohne abrasive Vorbelastung:        16 %
- Restverschmutzung mit einer abrasiven Vorbelastung von 100 Belastungszyklen:        8 %
- Restverschmutzung mit einer abrasiven Vorbelastung von 250 Belastungszyklen:        7 %

Vergleichsbeispiel 2

In das Gemisch aus Vergleichsbeispiel 1 werden 0,60 kg eines PTFE-Mikropulvers (SST-2; Firma Shamrock, d = ca. 12,5 $\mu$m) dispergiert.

Anschließend erfolgt die Zugabe von Peroxiden und das thermische Aushärten der Gießmasse in geeigneten Formen (Küchenspüle) wie in Vergleichsbeispiel 1 angegeben.

Von einem Probenstück der Spüle wird vor und nach erfolgter UV-Bestrahlung die Oberflächenenergie sowie ihr dispersiver und polarer Anteil bestimmt. Ferner werden Probenstücke vor und nach der UV-Bestrahlung und ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

a) Probenstück vor der UV-Bestrahlung

- Oberflächenenergie:         43,34 mN/m
- dispersiver Anteil:         38,87 mN/m
- polarer Anteil:         4,47 mN/m
- Restverschmutzung ohne abrasive Vorbelastung:         5 %
- Restverschmutzung mit einer abrasiven Vorbelastung von 100 Belastungszyklen:         7 %
- Restverschmutzung mit einer abrasiven Vorbelastung von 250 Belastungszyklen :         6 %

b) Probenstück nach der UV-Bestrahlung

- Oberflächenenergie:         43,97 mN/m
- dispersiver Anteil:         30,42 mN/m
- polarer Anteil:         13,55 mN/m
- Restverschmutzung ohne abrasive Vorbelastung:         13 %
- Restverschmutzung mit einer abrasiven Vorbelastung von 100 Belastungszyklen:         6 %
- Restverschmutzung mit einer abrasiven Vorbelastung von 250 Belastungszyklen:         5 %

Beispiel 1

Dem Gemisch aus Vergleichsbeispiel 1 werden 0,70 kg eines acrylatfunktionalisierten Oligosiloxans (Tegomer V-Si 7255; Firma Goldschmidt AG, Deutschland) zugefügt. Anschließend erfolgt die Zugabe von Peroxiden und das thermische Aushärten der Gießmasse in geeigneten Formen (Küchenspüle) wie in Vergleichsbeispiel 1 angegeben.

Von einem Probenstück der Spüle wird vor und nach der UV-Bestrahlung die Oberflächenenergie sowie ihr dispersiver und polarer Anteil bestimmt. Ferner werden Probestücke vor und nach der UV-Bestrahlung und ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

a) Probenstück vor der UV-Bestrahlung

- Oberflächenenergie:         31,75 mN/m
- dispersiver Anteil:         28,35 mN/m
- polarer Anteil:         3,40 mN/m
- Restverschmutzung ohne abrasive Vorbelastung:         4%
- Restverschmutzung mit einer abrasiven Vorbelastung von 100 Belastungszyklen:         5 %
- Restverschmutzung mit einer abrasiven Vorbelastung von 250 Belastungszyklen:         4 %

b) Probenstück nach der UV-Bestrahlung

- Oberflächenenergie:         28,22 mN/m
- dispersiver Anteil:         22,94 mN/m
- polarer Anteil:         5,28 mN/m
- Restverschmutzung ohne abrasive Vorbelastung:         12 %
- Restverschmutzung mit einer abrasiven Vorbelastung von 100 Belastungszyklen:         6 %
- Restverschmutzung mit einer abrasiven Vorbelastung von 250 Belastungszyklen:         6 %

Beispiel 2

In das Gemisch aus Beispiel 1 werden 0,73 kg eines acrylatfunktionalisierten Oligosiloxans (Tegomer V-Si 7255; Firma Goldschmidt AG, Deutschland) gegeben und 0,62 kg eines partikulären PTFE-Mikropulvers (SST-2; Firma Shamrock, d = ca. 12,5 μm) dispergiert. Anschließend erfolgt die Zugabe von Peroxiden und das thermische Aushärten der Gießmasse in geeigneten Formen (Küchenspüle) wie in Vergleichsbeispiel 1 angegeben.

Von einem Probenstück der Spüle werden die Oberflächenenergie sowie ihr dispersiver und polarer Anteil bestimmt. Ferner werden Probenstücke vor und nach der Bestrahlung und ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

a) Probenstück vor der UV-Bestrahlung

- Oberflächenenergie: 33,19 mN/m
- dispersiver Anteil: 32,88 mN/m
- polarer Anteil: 0,31 mN/m
- Restverschmutzung ohne abrasive Vorbelastung: 7 %
- Restverschmutzung mit einer abrasiven Vorbelastung von 100 Belastungszyklen: 4 %
- Restverschmutzung mit einer abrasiven Vorbelastung von 250 Belastungszyklen: 4 %

b) Probenstück nach der UV-Bestrahlung

- Oberflächenenergie: 32,71 mN/m
- dispersiver Anteil: 27,79 mN/m
- polarer Anteil: 4,92 mN/m
- Restverschmutzung ohne abrasive Vorbelastung: 13 %
- Restverschmutzung mit einer abrasiven Vorbelastung von 100 Belastungszyklen: 5 %
- Restverschmutzung mit einer abrasiven Vorbelastung von 250 Belastungszyklen: 5%

Beispiel 3

In das Gemisch aus Vergleichsbeispiel 1 werden 0,73 kg eines acrylatfunktionalisierten Oligosiloxans (Tegomer V-Si 7255; Firma Goldschmidt AG, Deutschland) gegeben und 0,33 kg einer hydrophobisierten hochdispersen Kieselsäuretype (TS 720; d = ca. 20 nm; Firma Cabot) dispergiert. Anschließend erfolgt die Zugabe von Peroxiden und das thermische Aushärten der Gießmasse in geeigneten Formen (Küchenspüle) wie in Vergleichsbeispiel 1 angegeben.

Von einem Probenstück der Spüle werden die Oberflächenenergie sowie ihr dispersiver und polarer Anteil bestimmt. Ferner werden Probenstücke der Spüle vor und nach der UV-Bestrahlung und ohne und nach erfolgter abrasiver Vorbelastung mit einem synthetischen Modellschmutz verunreinigt und unter definierten Bedingungen gereinigt und die an der Oberfläche verbleibende Restverschmutzung über eine photoelektrische Helligkeitsmessung bestimmt.

a) Probenstück vor der UV-Bestrahlung

- Oberflächenenergie: 37,95 mN/m
- dispersiver Anteil: 37,20 mN/m
- polarer Anteil: 0,75 mN/m
- Restverschmutzung ohne abrasive Vorbelastung: 6 %
- Restverschmutzung mit einer abrasiven Vorbelastung von 100 Belastungszyklen: 3 %
- Restverschmutzung mit einer abrasiven Vorbelastung von 250 Belastungszyklen: 4 %

b) Probenstück nach der UV-Bestrahlung

- Oberflächenenergie: 34,31 mN/m
- dispersiver Anteil: 24,60 mN/m
- polarer Anteil: 9,72 mN/m
- Restverschmutzung ohne abrasive Vorbelastung: 13 %
- Restverschmutzung mit einer abrasiven Vorbelastung von 100 Belastungszyklen: nicht bestimmt
- Restverschmutzung mit einer abrasiven Vorbelastung von 250 Belastungszyklen: nicht bestimmt

Tabelle 1

| | Vergleichsbeispiel 1 | Vergleichsbeispiel 2 | Beispiel 1 | Beispiel 2 | Beispiel 3 |
|---|---|---|---|---|---|
| funktionalisiertes Organosiloxan | - | - | acrylatfunktionalisiertes Organosiloxan | acrylatfunktionalisiertes Organosiloxan | acrylatfunktionalisiertes Organosiloxan |
| Anteil am Matrixmaterial [Gew.-%] | - | - | 5,5 | 5,5 | 5,5 |
| hydrophobes und/oder oleophobes Material | - | PTFE | - | PTFE | hydrophobisierte Kieselsäure |
| Anteil am Matrixmaterial [Gew.-%] | - | 4,7 | - | 4,7 | 2,5 |
| Vor der UV-Bestrahlung | | | | | |
| Oberflächenenergie [mN/m] | 43,28 | 43,34 | 31,75 | 33,19 | 37,95 |
| dispersiver Anteil [mN/m] | 40,44 | 38,87 | 28,35 | 32,88 | 37,20 |
| polarer Anteil [mN/m] | 2,84 | 4,47 | 3,40 | 0,31 | 0,75 |
| Belastungszyklen [U] | 0 | 0 | 0 | 0 | 0 |
| Restverschmutzung [%] | 12 | 5 | 4 | 7 | 6 |
| Belastungszyklen [U] | 100 | 100 | 100 | 100 | 100 |
| Restverschmutzung [%] | 11 | 7 | 5 | 4 | 3 |
| Belastungszyklen [U] | 250 | 250 | 250 | 250 | 250 |
| Restverschmutzung [%] | 11 | 6 | 4 | 4 | 4 |

EP 1 487 906 B1

Tabelle 2

| | Vergleichsbeispiel 1 | Vergleichsbeispiel 2 | Beispiel 1 | Beispiel 2 | Beispiel 3 |
|---|---|---|---|---|---|
| funktionalisiertes Organosiloxan | - | - | acrylatfunktionalisiertes Organosiloxan | acrylatfunktionalisiertes Organosiloxan | acrylatfunktionalisiertes Organosiloxan |
| Anteil am Matrixmaterial [Gew.-%] | - | - | 5,5 | 5,5 | 5,5 |
| hydrophobes und/oder oleophobes Material | - | PTFE | - | PTFE | hydrophobisierte Kieselsäure |
| Anteil am Matrixmaterial [Gew.-%] | - | 4,7 | - | 4,7 | 2,5 |
| Nach der UV-Bestrahlung (Bestrahlungsdosis: 1.538 MJ/m$^2$) | | | | | |
| Oberflächenenergie [mN/m] | 45,99 | 43,97 | 28,22 | 32,71 | 34,31 |
| dispersiver Anteil [mN/m] | 25,33 | 30,42 | 22,94 | 27,79 | 24,60 |
| polarer Anteil [mN/m] | 20,66 | 13,55 | 5,28 | 4,92 | 9,72 |
| Belastungszyklen [U] | 0 | 0 | 0 | 0 | 0 |
| Restverschmutzung [%] | 16 | 13 | 12 | 13 | 13 |
| Belastungszyklen [U] | 100 | 100 | 100 | 100 | 100 |
| Restverschmutzung [%] | 8 | 6 | 6 | 5 | nicht bestimmt |
| Belastungszyklen [U] | 250 | 250 | 250 | 250 | 250 |
| Restverschmutzung [%] | 7 | 5 | 6 | 5 | nicht bestimmt |

Die Ergebnisse zur Untersuchung der Oberflächenenergie und des Reinigungsverhaltens von einem Probenstück nach einem Vergleichsbeispiel 1 und 2 sowie nach einem der Beispiele 1 bis 3 vor und nach einer UV-Bestrahlung sind in der Tabelle 1 bzw. in der Tabelle 2 zusammengefasst.

Ein Probenstück nach einem Vergleichsbeispiel 1 weist vor der UV-Bestrahlung eine Oberflächenenergie von 43,28 mN/m auf, wobei ihr dispersiver Anteil einen Wert von 40,44 mN/m und ihr polarer Anteil einen Wert von 2,84 mN/m aufweist. Ohne abrasive Vorbelastung weist das Probenstück nach dem Reinigungstest eine Restverschmutzung von 12 % auf, nach einer abrasiven Vorbelastung von 100 und 250 Belastungszyklen eine Restverschmutzung von jeweils 11 %. Nach der UV-Bestrahlung mit einer Bestrahlungsdosis von 1.538 MJ/m$^2$ weist ein Probenstück nach einem Vergleichsbeispiel 1 eine im Vergleich zur unbestrahlten Probe erhöhte Oberflächenenergie von 45,99 mN/m auf, wobei ihr dispersiver Anteil 25,33 mN/m und ihr polarer Anteil 20,66 mN/m beträgt. Das Reinigungsverhalten eines solchen Probenstücks ist im Vergleich zu einem unbestrahlten Probenstück deutlich verschlechtert und weist nach dem Reinigungstest eine Restverschmutzung von 16 % auf. Die Reinigungsfreundlichkeit der abrasive vorbelasteten und bestrahlten Probenstücke ist im Vergleich zu den abrasiv vorbelasteten, unbestrahlten Probenstücken mit 8% (100 Belastungszyklen) bzw. 7% (250 Belastungszyklen) recht deutlich verbessert.

Ein Probenstück nach einem Vergleichsbeispiel 2 enthält im Vergleich zu einem Probenstück nach einem Vergleichsbeispiel 1 zusätzlich 4,7 Gew.% PTFE-Mikropulver, welches einen relativ geringen Einfluss auf die Oberflächenenergie des Probenstücks hat, jedoch eine Abnahme des dispersiven Anteils und eine entsprechende Zunahme des polaren Anteils der Oberflächenenergie bewirkt. Im Vergleich zu einem Probenstück nach einem Vergleichsbeispiel 1 weist ein Probenstück nach einem Vergleichsbeispiel 2, sowohl ohne als auch mit abrasiver Vorbelastung ein deutlich verbesserte Reinigungsfreundlichkeit auf. Eine UV-Bestrahlung mit einer Bestrahlungsdosis von 1.538 MJ/m$^2$ bewirkt lediglich eine leichte Erhöhung der Oberflächenenergie, jedoch eine deutliche Veränderung des Verhältnisses von dispersivern und polarem Anteil zu Gunsten des polaren Anteils. Ein Probenstück nach einem Vergleichsbeispiel 2 weist im Vergleich zu einer unbestrahlten Probe nach der UV-Bestrahlung im Reinigungstest eine deutlich erhöhte Restverschmutzung auf, die bei abrasiv vorbelasteten Probenstücken deutlich geringer ausfällt.

Ein Probenstück nach einem Beispiel 1 umfasst im Vergleich zu einem Probenstück nach einem Vergleichsbeispiel 1 zusätzlich einen Anteil von 5,5 Gew.% eines acrylatfunktionalisierten Organosiloxans und weist im Vergleich zu einem Probenstück nach einem Vergleichsbeispiel 1 oder 2 eine deutlich verringerte Oberflächenenergie, insbesondere des dispersiven Anteils, auf, mit der eine deutlich verbesserte Reinigungsfreundlichkeit des Probenstücks, sowohl vor als auch nach abrasiver Vorbelastung, einhergeht. Eine UV-Bestrahlung eines solchen Probenstücks mit einer Bestrahlungsdosis von 1.538 MJ/m$^2$ bewirkt eine Absenkung der Oberflächenenergie und eine Änderung des Verhältnisses von dispersivern und polarem Anteil zu Gunsten des polaren Anteils, wobei das Probenstück im Reinigungstest eine deutlich erhöhte Restverschmutzung aufweist, die bei abrasiver Vorbelastung deutlich geringer ausfällt.

Ein Probenstück nach einem Beispiel 2 enthält im Vergleich zu einem Probenstück nach einem Vergleichsbeispiel 1 zusätzlich 5,5 Gew.% eines acrylatfunktionalisierten Organosiloxans und 4,7 Gew.% eines PTFE-Mikropulvers und weist im Vergleich zu einem Probenstück nach einem Vergleichsbeispiel 1 oder 2 eine deutlich verringerte Oberflächenenergie, sowohl bezüglich des dispersiven als auch des polaren Anteils, sowie eine deutlich verbesserte Reinigungsfreundlichkeit vor und nach abrasiver Vorbelastung auf. Eine UV-Bestrahlung eines solchen Probenstücks mit einer Bestrahlungsdosis von 1.538 MJ/m$^2$ bewirkt eine geringe Absenkung der Oberflächenenergie, jedoch eine deutliche Veränderung des Verhältnisses von dispersivern zu polarem Anteil zu Gunsten des polaren Anteils. Die UV-Bestrahlung bewirkt eine verringerte Reinigungsfreundlichkeit des Probenstücks, die aber bei abrasiv vorbelasteten Probenstücken geringer ausfällt.

Ein Probenstück nach einem Beispiel 3 enthält im Vergleich zu einem Probenstück nach einem Vergleichsbeispiel 1 5,5 Gew.% eines acrylatfunktionalisierten Organosiloxans und 2,5 Gew.% einer hydrophobisierten Kieselsäure, und weist gegenüber eines Probenstücks nach einem Vergleichsbeispiel 1 oder 2 eine deutlich verringerte Oberflächenenergie, sowohl des dispersiven als auch des polaren Anteils, sowie eine deutlich verbesserte Reinigungsfreundlichkeit vor und nach abrasiver Vorbelastung auf. Die UV-Bestrahlung eines solchen Probenstücks mit einer Bestrahlungsdosis von 1.538 MJ/m$^2$ bewirkt eine Absenkung der Oberflächenenergie insgesamt und eine Veränderung des Verhältnisses von dispersivern und polarem Anteil zu Gunsten des polaren Anteils sowie eine verminderte Reinigungsfreundlichkeit eines Probenstücks.

**Patentansprüche**

1. Aushärtbare Gießmasse zur Herstellung von Kunststoffformkörpern mit einer flüssigen monomeren Acrylatkomponente und einem Anteil eines partikelförmigen anorganischen Materials im Bereich von 45 bis 85 Gew.%, bezogen auf die Gießmasse, **dadurch gekennzeichnet, dass** die Gießmasse ferner eine hydrophobe Monomerkomponente enthält, die mindestens ein mit einer ungesättigten Gruppe funktionalisiertes Organosiloxan umfasst.

**2.** Gießmasse nach Anspruch 1, **dadurch gekennzeichnet, dass** ein mit einer ungesättigten Gruppe funktionalisiertes Organosiloxan ein mit einer Ethenyl-, einer 1,1-Ethendiyl- und/oder einer 1,2-Ethendiyl-Gruppierung funktionalisiertes Organosiloxan ist.

**3.** Gießmasse nach Anspruch 2, **dadurch gekennzeichnet, dass** ein mit einer Ethenyl-Gruppierung funktionalisiertes Organosiloxan ein acrylatfunktionalisiertes Organosiloxan ist.

**4.** Gießmasse nach Anspruch 2 oder 3, **dadurch gekennzeichnet, dass** ein mit einer 1,1-Ethendiyl-Gruppierung funktionalisiertes Organosiloxan ein methacrylatfunktionalisiertes Organosiloxan ist.

**5.** Gießmasse nach einem der Ansprüche 1 bis 4, **dadurch gekennzeichnet, dass** ein mit einer ungesättigten Gruppe funktionalisiertes Organosiloxan auf einem Organosiloxanylderivat eines Alkandiolmonovinylethers basiert.

**6.** Gießmasse nach einem der Ansprüche 1 bis 5, **dadurch gekennzeichnet, dass** ein mit einer ungesättigten Gruppe funktionalisiertes Organosiloxan auf einem Organosiloxanylderivat des 1,4-Butandiolmonovinylethers basiert.

**7.** Gießmasse nach einem der Ansprüche 1 bis 6, **dadurch gekennzeichnet, dass** der Anteil an hydrophober Monomerkomponente ca. 0,1 bis ca. 15 Gew.% beträgt.

**8.** Gießmasse nach einem der Ansprüche 1 bis 7, **dadurch gekennzeichnet, dass** der Anteil an hydrophober Monomerkomponente 1 bis 12 Gew.% beträgt.

**9.** Gießmasse nach einem der Ansprüche 1 bis 8, **dadurch gekennzeichnet, dass** der Anteil an hydrophober Monomerkomponente 2 bis 10 Gew.%, vorzugsweise 3 bis 8 Gew.%, beträgt.

**10.** Gießmasse nach einem der Ansprüche 1 bis 9, **dadurch gekennzeichnet, dass** die Gießmasse ferner mindestens ein partikelförmiges hydrophobes und/oder oleophobes Material umfasst.

**11.** Gießmasse nach Anspruch 10, **dadurch gekennzeichnet, dass** ein partikelförmiges hydrophobes und/oder oleophobes Material Polytetrafluorethylen, Fluorelastomer auf der Basis von Vinylidenfluorid-Hexafluorpropylen-Copolymerisaten, Polypropylen, Polypropylen-Copolymer, hydrophobisierte Kieselsäure oder ein Silikonelastomer ist.

**12.** Gießmasse nach Anspruch 10 oder 11, **dadurch gekennzeichnet, dass** der Anteil an partikelförmigem hydrophobem und/oder oleophobem Material ca. 0,5 bis ca. 15 Gew.%, vorzugsweise 1 bis 10 Gew.% und besonders bevorzugt 2 bis 7 Gew.%, beträgt.

**13.** Gießmasse nach einem der Ansprüche 10 bis 12, **dadurch gekennzeichnet, dass** das hydrophobe und/oder oleophobe Material eine Partikel- oder Partikelagglomeratgröße von < 500 $\mu$m aufweist, bevorzugt im Mittel $\leq$ 50 $\mu$m.

**14.** Kunststoffformkörper, hergestellt unter Verwendung einer Gießmasse nach einem der Ansprüche 1 bis 13.

**15.** Kunststoffformkörper nach Anspruch 14, **dadurch gekennzeichnet, dass** mindestens eine Sichtseitenoberflächenschicht des Formkörpers von der Gießmasse nach einem der Ansprüche 1 bis 13 gebildet ist.

**16.** Kunststoffformkörper nach Anspruch 15, **dadurch gekennzeichnet, dass** die Sichtseitenoberflächenschicht eine Dicke von 1 mm oder mehr aufweist.

**17.** Kunststoffformkörper nach einem der Ansprüche 14 bis 16, **dadurch gekennzeichnet, dass** das hydrophobe und/oder oleophobe Material in den aus der Gießmasse gebildeten Bereichen im Wesentlichen homogen verteilt ist.

**18.** Kunststoffformkörper nach einem der Ansprüche 14 bis 17, **dadurch gekennzeichnet, dass** der Formkörper eine Küchenspüle oder eine Küchenarbeitsplatte ist.

**19.** Verwendung von mit mindestens einer ungesättigten Gruppe funktionalisierten Organosiloxanen als Monomerkomponente in aushärtbaren Gießmassen, die zur Herstellung von Formkörpern des Sanitärbereichs, insbesondere von Küchenspülen und Küchenarbeitsplatten, verwendet werden.

**20.** Verwendung nach Anspruch 19, **dadurch gekennzeichnet, dass** die Gießmasse eine Gießmasse nach einem der Ansprüche 1 bis 13 ist.

## Claims

1. Curable molding composition for the production of shaped plastics articles comprising a liquid monomeric acrylate component and an amount of a particulate inorganic material ranging from 45 to 85 wt%, based on the molding composition, **characterized in that** the molding composition also contains a hydrophobic monomeric component which comprises at least one organosiloxane that is functionalized with an unsaturated group.

2. Molding composition as defined in claim 1, **characterized in that** an organosiloxane that is functionalized with an unsaturated group is an organosiloxane functionalized with an ethenyl, an ethene-1,1-diyl and/or an ethene-1,2-diyl group.

3. Molding composition as defined in claim 2, **characterized in that** an organosiloxane that is functionalized with an ethenyl group is an acrylate-functionalized organosiloxane.

4. Molding composition as defined in claim 2 or claim 3, **characterized in that** an organosiloxane that is functionalized with an ethene-1,1-diyl group is a methacrylate-functionalized organosiloxane.

5. Molding composition as defined in any one of claims 1 to 4, **characterized in that** an organosiloxane that is functionalized with an unsaturated group is based on an organosiloxanyl derivative of an alkanediol monovinyl ether.

6. Molding composition as defined in any one of claims 1 to 5, **characterized in that** an organosiloxane that is functionalized with an unsaturated group is based on an organosiloxanyl derivative of butane-1,4-diol monovinyl ether.

7. Molding composition as defined in any one of claims 1 to 6, **characterized in that** the content of hydrophobic monomeric component is from approximately 0.1 to approximately 15 wt%.

8. Molding composition as defined in any one of claims 1 to 7, **characterized in that** the content of hydrophobic monomeric component is from 1 to 12 wt%.

9. Molding composition as defined in any one of claims 1 to 8, **characterized in that** the content of hydrophobic monomeric component is from 2 to 10 wt%, preferably from 3 to 8 wt%.

10. Molding composition as defined in any one of claims 1 to 9, **characterized in that** the molding composition also comprises at least one particulate hydrophobic and/or oleophobic material.

11. Molding composition as defined in claim 10, **characterized in that** a particulate hydrophobic and/or oleophobic material is polytetrafluoroethylene, a fluorocarbon elastomer based on vinylidene fluoride hexafluoropropylene copolymers, polypropylene, a polypropylene copolymer, hydrophobed silicic acid, or a silicone elastomer.

12. Molding composition as defined in claim 10 or claim 11, **characterized in that** the content of particulate hydrophobic and/or oleophobic material is from approximately 0.5 to approximately 15 wt%, preferably from 1 to 10 wt%, and more preferably from 2 to 7 wt%.

13. Molding composition as defined in any one of claims 10 to 12, **characterized in that** the hydrophobic and/or oleophobic material has a particle size or particle agglomerate size of less than 500 $\mu$m, preferably, on average, less than or equal to 50 $\mu$m.

14. Shaped plastics article, produced using a molding composition as defined in any one of claims 1 to 13.

15. Shaped plastics article as defined in claim 14, **characterized in that** at least one face surface layer of the shaped article is formed by the molding composition as defined in any one of claims 1 to 13.

16. Shaped plastics article as defined in claim 15, **characterized in that** the face surface layer has a thickness of 1 mm or more.

**17.** Shaped plastics article as defined in any one of claims 14 to 16, **characterized in that** the hydrophobic and/or oleophobic material is substantially homogeneously distributed in the regions formed by the molding composition.

**18.** Shaped plastics article as defined in any one of claims 14 to 17, **characterized in that** the shaped article is a kitchen sink unit or a kitchen worktop.

**19.** Use of organosiloxanes functionalized with at least one unsaturated group as the monomeric component of curable molding compositions used in the production of shaped articles for sanitary facilities, in particular, kitchen sink units and kitchen worktops.

**20.** Use as defined in claim 19, **characterized in that** the molding composition is a molding composition as defined in any one of claims 1 to 13.

**Revendications**

**1.** Masse de coulée durcissable pour la fabrication de corps moulés en plastique, comprenant un composant acrylate monomère liquide et une proportion d'un matériau inorganique particulaire allant de 45 à 85 % en poids, ramenée à la masse de coulée, **caractérisée en ce que** la masse de coulée contient également un composant monomère hydrophobe qui comprend au moins un organosiloxane fonctionnalisé avec un groupe insaturé.

**2.** Masse de coulée selon la revendication 1, **caractérisée en ce qu'**un organosiloxane fonctionnalisé avec un groupe insaturé est un organosiloxane fonctionnalisé avec un groupement éthényle, un groupement 1,1-éthènediyle et/ou un groupement 1,2-éthènediyle.

**3.** Masse de coulée selon la revendication 2, **caractérisée en ce qu'**un organosiloxane fonctionnalisé avec un groupement éthényle est un organosiloxane fonctionnalisé avec un acrylate.

**4.** Masse de coulée selon la revendication 2 ou 3, **caractérisée en ce qu'**un organosiloxane fonctionnalisé avec un groupement 1,1-éthènediyle est un organosiloxane fonctionnalisé avec un méthacrylate.

**5.** Masse de coulée selon l'une quelconque des revendications 1 à 4, **caractérisée en ce qu'**un organosiloxane fonctionnalisé avec un groupe insaturé est à base d'un dérivé d'organosiloxanyle d'un éther monovinylique d'alcanediol.

**6.** Masse de coulée selon l'une quelconque des revendications 1 à 5, **caractérisée en ce qu'**un organosiloxane fonctionnalisé avec un groupe insaturé est à base d'un dérivé d'organosiloxanyle de l'éther monovinylique de 1,4-butanediol.

**7.** Masse de coulée selon l'une quelconque des revendications 1 à 6, **caractérisée en ce que** la proportion du composant monomère hydrophobe va d'environ 0,1 à environ 15 % en poids.

**8.** Masse de coulée selon l'une quelconque des revendications 1 à 7, **caractérisée en ce que** la proportion du composant monomère hydrophobe va de 1 à 12 % en poids.

**9.** Masse de coulée selon l'une quelconque des revendications 1 à 8, **caractérisée en ce que** la proportion du composant monomère hydrophobe va de 2 à 10 % en poids, de préférence de 3 à 8 % en poids.

**10.** Masse de coulée selon l'une quelconque des revendications 1 à 9, **caractérisée en ce que** la masse de coulée comprend également au moins un matériau particulaire hydrophobe et/ou oléophobe.

**11.** Masse de coulée selon la revendication 10, **caractérisée en ce qu'**un matériau particulaire hydrophobe et/ou oléophobe est un polytétrafluoréthylène, un élastomère fluoré à base de copolymères de fluorure de vinylidène et d'hexafluoropropylène, le polypropylène, un copolymère de polypropylène, l'acide silicique hydrophobisé ou un élastomère de silicone.

**12.** Masse de coulée selon la revendication 10 ou 11, **caractérisée en ce que** la proportion du matériau particulaire hydrophobe et/ou oléophobe va d'environ 0,5 à environ 15 % en poids, de préférence de 1 à 10 % en poids et de façon particulièrement préférée de 2 à 7 % en poids.

**13.** Masse de coulée selon l'une quelconque des revendications 10 à 12, **caractérisée en ce que** le matériau hydrophobe et/ou oléophobe présente une taille de particule ou une taille d'agglomérat de particules inférieure à 500 µm, de préférence en moyenne inférieure ou égale à 50 µm.

**14.** Corps moulé en plastique fabriqué en utilisant une masse de coulée selon l'une quelconque des revendications 1 à 13.

**15.** Corps moulé en plastique selon la revendication 14, **caractérisé en ce qu'**au moins une couche de surface latérale visible du corps moulé est formée par la masse de coulée selon l'une quelconque des revendications 1 à 13.

**16.** Corps moulé en plastique selon la revendication 15, **caractérisé en ce que** la couche de surface latérale visible présente une épaisseur de 1 mm ou plus.

**17.** Corps moulé en plastique selon l'une quelconque des revendications 14 à 16, **caractérisé en ce que** le matériau hydrophobe et/ou oléophobe est réparti de façon sensiblement homogène dans les zones formées à partir de la masse de coulée.

**18.** Corps moulé en plastique selon l'une quelconque des revendications 14 à 17, **caractérisé en ce que** le corps moulé est un bloc-évier de cuisine ou un plan de travail de cuisine.

**19.** Utilisation d'organosiloxanes fonctionnalisés comprenant au moins un groupe insaturé comme composant monomère dans des masses de coulée durcissables qui sont utilisées pour la fabrication de corps moulés dans le secteur sanitaire, en particulier de blocs-éviers de cuisine et de plans de travail de cuisine.

**20.** Utilisation selon la revendication 19, **caractérisée en ce que** la masse de coulée est une masse de coulée selon l'une quelconque des revendications 1 à 13.

FIG.1

# FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2449656
- EP 0361101 A
- WO 9523825 A
- DE 3535283 A1
- EP 0819719 A
- EP 0716097 B1